# EUROPEAN PATENT APPLICATION

(11) **EP 1 010 368 A1**
(43) Date of publication of application: **21.06.2000**
(21) Application number: 98204275.6
(22) Date of filing: 16.12.1998
(51) Int. Cl.: A23B 7/10, A23B 7/157

(54) **Composition for preserving vegetables and fruit**

(71) Applicant: Perform Plus N.V., Curacao (AN)
(72) Inventor: Paaimaans, Gerrit Johan, 3063 DH Rotterdam (NL); De Ruiter, Arie, 2901 KJ Veenendaal (NL); Wink, Hendrik Arie, 1625 GN Hoorn (NL)
(74) Representative: de Bruijn, Leendert C.

(57) **Abstract**

The present invention relates to a composition for preserving vegetables and fruit, that contains
L-ascorbic acid and/or a salt thereof, preferably 20 to 60 wt.%
citric acid and/or a salt thereof, preferably 20 to 60 wt.%,
calcium chloride, preferably 5 to 40 wt.%,
wherein the weight percentages are based on the total weight of the composition.

The invention further relates to an aqueous solution containing the composition described above and to a process for preserving vegetables and fruit, wherein the vegetables and fruit which have optionally been pretreated, such as washed, peeled, cut, sliced and/or grated, are submerged in this aqueous solution and dried by centrifugation, packed under reduced oxygen conditions and stored at low temperature (0-7°C).

## Description

The present invention relates to a composition for preserving vegetables and fruit, an aqueous solution containing said composition and a process for preserving vegetables and fruit.

It has been known for a long time that certain vegetables and fruit discolour when they are peeled and/or cut. Examples thereof are vegetables such as chicory, carrots, salads and celeriac and fruit such as apples, pears, peaches, nectarines and apricots. Generally the process of discolouration is enzymatic and results in vegetables and fruit which are partially coloured brown or pink.

The discolouring of vegetables and fruit forms a particular problem in places where large amounts of such vegetables and fruit are processed such as in hospitals, canteens, restaurants etc. Further the modem consumer more often requires pre-cut vegetables and fruit so that he can prepare his meals in a short time without too much effort. Here also it would be desirable if the vegetables and fruit could be preserved for a longer period of time.

It is known to treat vegetables and fruit which have been peeled, cut or otherwise treated so that there is a risk of discolouration, by means of sulphur containing compounds. However, the use of such sulphur containing compounds is subject to legal restrictions.

Further, from WO 94/02025 it is known to treat mechanically preprocessed and washed raw vegetables with an aqueous solution containing sodium hydrogen carbonate and/of sodium carbonate, citric acid and at least one element from the group of alkali metals and alkaline earth metals. However, this treatment does not give satisfactory results all the time for all types of vegetables and fruit.

The present invention provides a composition for preserving vegetables and fruit, characterized in that it contains L-ascorbic acid and/or a salt thereof, citric acid and/or a salt thereof and calcium chloride. With this composition it is possible in a relatively fast and simple way to preserve vegetables and fruit, in particular to prevent discolouration thereof.

Preferably the components of the composition of the invention are present in the following amounts:
20 to 60 wt.%, preferably 30 to 50 wt.%, most preferably 35 to 45 wt.% of L-ascorbic acid and/or a salt thereof;
20 to 60 wt.%, preferably 30 to 50 wt.%, most preferably 35 to 45 wt.% of citric acid and/or a salt thereof,
5 to 40 wt.%, preferably 10 to 30 wt.%, most preferably 15 to 20 wt.% of calcium chloride;
wherein the weight percentages are based on the total weight of the composition.

The salts of the L-ascorbic acid and citric acid are preferably alkali metal salts, such as sodium of potassium salts. Preferably the composition according to the invention contains an alkalimetal salt of L-ascorbic acid, preferably sodium ascorbate, citric acid and an alkalimetal salt of citric acid, preferably trisodium citrate and calcium chloride. The weight ratio of the alkalimetal salt of L-ascorbic acid to citric acid and the alkalimetal salt of citric acid is preferably between 2:1 and 1:2. The weight ratio of citric acid to the alkalimetal salt thereof is preferably between 4:1 and 1.5:1.

In general, before treating the vegetables and fruit with the composition according to the present invention, the composition will first be dissolved in water. The aqueous solution contains the composition according to invention in an amount of 0.01 to 20 g/100 ml, preferably 0.1 to 10 g/100 ml of water.

It is of importance that the pH of the aqueous solution does not become too low, i.e. that the solution becomes to acidic. If the pH is too low the vegetables and fruit get an acidic taste, which is undesirable. Generally, the pH of the solution will be greater than 3.5. The pH will depend on the amounts of ascorbic acid and citric acid used. It can be adjusted by either varying the ratio between ascorbic acid and ascorbate or by varying the ratio between citric acid and citrate. It is preferred to use ascorbate and to adjust the pH by means of varying the ratio between citric acid and citrate.

According to a further embodiment the present invention relates to a process for preserving vegetables and fruit, wherein the vegetables and fruit are treated with an aqueous solution containing the composition according to the invention and then dried. Optionally the vegetables and fruit can first be washed, peeled, cut and/or grated before being subject to the process according to the present invention. A known method for drying the vegetables is by means of centrifugation.

The time period for the treatment will be 10 seconds to 10 minutes. In general the treatment is carried out by submerging the vegetables and fruit in an aqueous solution containing the composition of the invention. The temperature of the solution is 5 to 15°C, preferably 0 to 7°C.

It should be noted that the concentration of the composition of the invention in the aqueous solution will depend on the specific conditions of the treatment of the vegetables and fruit such as the time of the treatment, the type of vegetable or fruit used and the way they have been pretreated (cutting, peeling, etc.) and of the temperature of the aqueous solution (preferably 0-7°C). It is important to adjust the conditions of the process such that only the surfaces of the vegetables or fruit to be treated are covered with the composition. It should not diffuse into the vegetables or fruit. Optimalisation of the process is within the reach of the person skilled in the art.

For a treatment of 30 to 90 seconds at a temperature of about 15 °C the vegetables and fruit can preferably be submerged in a solution containing:
1.5 g to 2.5 g/100 ml of an alkali metal salt of L-ascorbic acid;
1.0 to 2.0 g/100 ml of citric acid;
0.5 to 1.0 g/100 ml of an alkali metal salt of citric acid; and
0.5 to 1.5 g/100 ml of calcium chloride.

After the treatment it is preferred that the vegetables and fruit are packaged straightaway. They can be packaged in any type of packaging which is commonly used for pre-cut vegetables. An example thereof is the modified atmosphere packaging (MAP) of vegetables and fruit. It is preferred that the atmosphere in the package is of a reduced oxygen content.

For optimum preservation of the vegetables and fruit which have been treated and packaged according to the invention, the vegetables and fruit should be stored at a low temperature, preferably between 0 and 7°C.

### Examples

Chicory, celeriac, apples (Granny Smith) and nectarines were treated with the composition according to the invention and with a reference composition (water) and the discolouration was assessed visually after different periods of storage.

First the vegetables and the fruit were cut. The chicory was cut to pieces having an average size of 0.5 cm, the celeriac was peeled and grated, the apples were peeled and cut into 10 slices and the nectarines were cut into 8 slices.

Then an aqueous solution for treating the vegetables and fruit according to the invention was prepared by dissolving the following components in the amounts indicated in water:
- sodium L-ascorbate (NaC₆H₇O₆): 2.25 g/100 ml
- citric acid (C₆H₈O₇): 1.5 g/100 ml
- trisodium citrate (Na₃C₆H₅O₇·2H₂O): 0.78 g/100 ml
- calcium chloride (CaCl₂): 1.0 g/100 ml

This solution had a pH of 3,7 (at room temperature). The temperature of the solution was 15 °C.

The first series of vegetables and fruit was submerged in the aqueous solution described above for 1 minute, dried by centrifugation and packaged. A second series of vegetables and fruit, serving as reference, was submerged in water for 1 minute, dried by centrifugation and packaged. The nectarine slices were not dried by centrifugation but patted dry to prevent damaging.

### Example 1

In this example both series of vegetables and fruit (treated and reference) were packaged in bags of 19 x 15 cm made of a bi-orientated polypropylene (BOPP) film with a thickness of 30 µm, which is a material commonly used for packaging vegetables. Each bag contained 150 grams of vegetables/fruit. The head space is air. The bags were stored at 7 °C. On day 0 (day of preparation), day 0 (after 6 hours storage), day 1, day 3 and day 5 the contents of the bags were analyzed visually to determine the discolouration. The following grades were used to judge the degree of discolouration:
- -: no discolouration
- +: slight discolouration
- ++: moderate discolouration
- +++: strong discolouration

The results are shown in Table 1.

**Table 1**

| Time | Cut chicory (treated) | Cut chicory (reference) | Grated celeriac (treated) | Grated celeriac (reference) |
|---|---|---|---|---|
| day 0 | - | - | - | - |
| day 0 (after 6 hours) | - | + | - | ++ |
| day 1 | - | + | - | +++ |
| day 3 | + | +++ | ++ | +++ |
| day 5 | ++ | +++ | +++ | +++ |

| Time | Apple slices (treated) | Apple slices (reference) | Nectarine slices (treated) | Nectarine slices (reference) |
|---|---|---|---|---|
| day 0 | - | - | - | - |
| day 0 (after 6 hours) | - | ++ | - | - |
| day 1 | - | +++ | - | - |
| day 3 | + | +++ | - | + |
| day 5 | ++ | +++ | - | ++ |

### Example 2

Example 1 was repeated, except that the package consisted of a bag of 19 x 15 cm made of a packaging film with a specific oxygen permeability and that before closing by heat sealing, the bags were filled with a gas mixture consisting of CO₂ and N₂. The assessment of the discolouration was carried out in the same way as described in example 1. The results are shown in table 2.

**Table 2**

| Time | Cut chicory (treated) | Cut chicory (reference) | Grated celeriac (treated) | Grated celeriac (reference) |
|---|---|---|---|---|
| day 0 | - | - | - | - |
| day 0 (after 6 hours) | - | - | - | - |
| day 1 | - | + | - | - |
| day 3 | - | ++ | - | ++ |
| day 5 | + | +++ | - | +++ |

| Time | Apple slices (treated) | Apple slices (reference) | Nectarine slices (treated) | Nectarine slices (reference) |
|---|---|---|---|---|
| day 0 | - | - | - | - |
| day 0 (after 6 hours) | - | - | - | - |
| day 1 | - | - | - | - |
| day 3 | - | + | - | + |
| day 5 | - | + | - | + |
| day 8 | - | + | - | + |

These examples show that the composition according to the present invention inhibits discolouration of vegetables and fruit packaged in air (example 1). Under these conditions the vegetables and fruit can be stored for about 3 days without discolouration, whereas with untreated vegetables and fruit, discolouration already occurs after 6 hours.

By lowering the oxygen concentration in the packaging (example 2) the enzymatic discolouration of cut or grated vegetables and fruit is strongly inhibited. However, lowering the oxygen concentration is not enough to prevent discolouration. After three days the untreated vegetables and fruit (reference) showed discolouration. By combining the treatment with the composition according to the present invention with storage in an oxygen depleted atmosphere, the occurrence of a change in colour can be postponed significantly. After 5 days of storage under these conditions only the chicory is coloured slightly pink, whereas the other vegetables and fruit did not show any colour change at all.

## Claims

1. Composition for preserving vegetables and fruit, characterized in that it contains L-ascorbic acid and/or a salt thereof, citric acid and/or a salt thereof and calcium chloride.

2. Composition for preserving vegetables and fruit according to claim 1, characterized in that it contains
20 to 60 wt.% of L-ascorbic acid and/or a salt thereof;
20 to 60 wt.% of citric acid and/or a salt thereof,
5 to 40 wt.% of calcium chloride;
wherein the weight percentages are based on the total weight of the composition.

3. Composition according to claim 2, characterized in that it contains
30 to 50 wt.% of L-ascorbic acid and/or a salt thereof;
30 to 50 wt.% of citric acid and/or a salt thereof,
10 to 30 wt.% of calcium chloride;
wherein the weight percentages are based on the total weight of the composition.

4. Composition according to any of claims 1 to 3, which contains an alkali metal salt of L-ascorbic acid, citric acid, an alkali metal salt of citric acid and calcium chloride, wherein the weight ratio of the alkali metal salt of L-ascorbic acid to citric acid and the alkali metal salt of citric acid is between 2:1 and 1:2 and the weight ratio of citric acid to the alkali metal salt of citric acid is between 4:1 and 1.5:1.

5. Aqueous solution for preserving vegetables and fruit, characterized in that it contains the composition according to any of claims 1 to 4 in an amount of 0.01 to 20 g/100 ml of water.

6. Aqueous solution according to claim 5, characterized in that it has a pH greater than 3.5.

7. Process for preserving vegetables and fruit, characterized in that the vegetables and fruit are treated with a solution according to claim 5 or 6 and then dried by centrifugation.

8. Process according to claim 7, characterized in that the vegetables and fruit are submerged in a solution according to claim 5 or 6 for 10 seconds to 10 minutes and then dried by centrifugation.

9. Process according to claim 8, characterized in that the vegetables and fruit are submerged in a solution containing
1.5 g to 2.5 g/100 ml of an alkali metal salt of L-ascorbic acid;
1.0 to 2.0 g/100 ml of citric acid;
0.5 to 1.0 g/100 ml of an alkali metal salt of citric acid; and
0.5 to 1.5 g/100 ml of calcium chloride;
for 30 to 90 seconds, and then dried by centrifugation.

10. Process according to any of claims 7 to 9, characterized in that the vegetables and fruit are packaged after they have been dried by centrifugation, wherein the package besides the vegetables or fruit, preferably contains an atmosphere, in particular an atmosphere with reduced oxygen content.
